# EUROPEAN PATENT SPECIFICATION

(11) **EP 2 955 804 B1**
(45) Date of publication and mention of the grant of the patent: **08.08.2018**
(21) Application number: 15171096.9
(22) Date of filing: 09.06.2015
(51) Int. Cl.: H02G 3/04

(54) **Mounting assembly for attaching a product to a cable tray**
MONTAGEANORDNUNG FÜR DIE BEFESTIGUNG EINES ARTIKELS IN EINER KABELWANNE
ENSEMBLE DE MONTAGE POUR ATTACHER UNE PRODUIT AU PANIER D'UN CHEMIN DE CÂBLES

(30) Priority: 13.06.2014 US 201414303798
(43) Date of publication of application: 16.12.2015
(73) Proprietor: Textron Innovations Inc., Providence, Rhode Island 02903 (US)
(72) Inventor: Henderson, Damon Joseph, Rockford, IL Illinois 61109 (US); Dir, Corey, Rockford, IL 61109 (US)
(74) Representative: Müller, Enno

(56) References cited:
- WO-A1-2007/007181
- US-A- 5 779 229
- Anonymous: "HIS Business Mfg Co", , 31 December 2013 (2013-12-31), XP055209960, Retrieved from the Internet: URL:http://www.hizbiz.com/hb1a9Feature.asp x [retrieved on 2015-08-27]
- Gvk: "Cable Handling Equipment Catalogue INDUSTRIAL ELECTRICAL PRODUCT COMPANY", , 31 December 2008 (2008-12-31), XP055285564, Retrieved from the Internet: URL:http://www.gvk.com.au/pdf/cable-handli ng/cable-handling-equipment.pdf [retrieved on 2016-07-04]

## Description

### FIELD OF THE DISCLOSURE

The present disclosure relates generally to cable pulling, and specifically relates to a mounting assembly for attaching a product, such as a cable feeder or a cable roller, to a cable tray.

### BACKGROUND OF THE DISCLOSURE

Cable trays are commonly used in industrial-type buildings for routing cable. The cable lays on top of the cable tray and is visible. The cable can be easily changed and additional cables can be easily added. When pulling cables into a cable tray, a guide system is required to control the cable location since a full enclosure (conduit) is not provided. Prior art guide systems have rollers over which the cable rolls as it is being pulled along the cable tray.

Many current cable pulling accessories/feeders are fastened using loose pieces, such as screws and nuts that can easily be lost, dropped, or require extra hardware or hands to install quickly. Other attachment methods include screw-driven clamps that require handles and repetitive twisting motion to grab onto one or both sides of the cable tray. Cam locks also exist, but require users to adjust settings if desiring use on a wider range of tray sizes.

One example of a cable tray including a pulling mechanism is shown in United States Patent No. 5,779,229. The cable tray includes a tray member defining a predetermined path and mounted in the ceiling of a building to support a plurality of cables extending from a dedicated room to a plurality of workstations. The pulling mechanism includes a pulling rope defining a closed circuit and mounted to the tray member through pulleys for longitudinal movements along the predetermined path. The pulling rope is provided with a cable securing element to which cables to be installed from the dedicated room to the workstations may be attached. Longitudinal movements of the pulling rope along the predetermined path displace the cable securing element and the cables attached to it from the dedicated room towards the workstation.
Concerning a known mounting assembly for attaching a product to a cable tray is also to refer to a publication of HIS Business Mfg. Co. This know device has clamp feet to mount the device above a cable tray. Further is to refer as state of the art to WO 2007/007181 A1.

In the present disclosure, a mounting assembly is provided for attaching a cable feeder and cable feeder accessories to a cable tray. The mounting assembly provides improvements to the existing prior art and overcomes the disadvantages presented by the prior art. Other features and advantages will become apparent upon a reading of the attached specification, in combination with a study of the drawings.

### SUMMARY OF THE DISCLOSURE

A mounting assembly is provided for mounting a product, for example a cable feeder, accessory or roller, to a cable tray. The cables can be laid on the cable tray for routing through a building. The mounting assembly includes an elongated rod, first and second arms extending downwardly from the rod and attached to the cable tray, a ratchet mechanism attached to one of the arms, and an attachment member on the other of the arms. The ratchet mechanism includes a ratchet and an extendable and retractable strap. The strap can be extended around the bottom of the cable tray and attached to the attachment member. This quickly and easily installs the product on the cable tray.

### BRIEF DESCRIPTION OF THE DRAWINGS

The organization and manner of the structure and operation of the disclosure, together with further objects and advantages thereof, may best be understood by reference to the following description, taken in connection with the accompanying drawings, wherein like reference numerals identify like elements in which:
FIG. 1 is a perspective view of a cable tray, having a mounting assembly which incorporates the features of the present disclosure, attached thereto and being used to mount a product to the cable tray;
FIG. 2 is a perspective view of the mounting assembly and product shown in FIG. 1;
FIG. 3 is a side elevation view of the cable tray, having the product mounted thereto by the mounting assembly;
FIG. 4 is a perspective view of an alternate mounting assembly, having a product attached thereto;
FIG. 5 is a side elevation view of the alternate mounting assembly and product of FIG. 4; and
FIG. 6 is a perspective view of a cable tray, showing the mounting assembly of FIG. 1 attached thereto, the mounting assembly having locks in a different position, and being used to mount a different product to the cable tray.

### DETAILED DESCRIPTION OF THE ILLUSTRATED EMBODIMENT

While the disclosure may be susceptible to embodiment in different forms, there is shown in the drawings, and herein will be described in detail, a specific embodiment with the understanding that the present disclosure is to be considered an exemplification of the principles of the disclosure, and is not intended to limit the disclosure to that as illustrated and described herein. Therefore, unless otherwise noted, features disclosed herein may be combined together to form additional combinations that were not otherwise shown for purposes of brevity.

As is known in the art, a cable tray 20 is formed of a base 22 hung from the ceiling of a building by tray hangers (not shown) which may be formed of threaded rods, which attach between the base 22 and the ceiling. The base 22 may be formed of a ladder-type rack having a pair of rails 24a, 24b with a plurality of spaced apart rungs 26 or mesh (not shown) or solid surface (not shown) extending between the rails 24a, 24b. Cable 28 is laid on top of the base 22 for routing through the building. Cable trays 20 are commonly formed out of aluminum, fiberglass or steel. As is known in the art, cable trays 20 can be used instead of conduit.

The present disclosure provides a mounting assembly 32 to mount a product 34, such as a cable feeder, a cable pulling accessory, a cable roller, etc., to the cable tray 20. The mounting assembly 32 quickly and easily installs onto the cable tray 20. The mounting assembly 32 includes an elongated rod 36, a first arm 38 extending from the rod 36, a second arm 40 extending from the rod 36, and a ratchet mechanism attached to the first arm 38 and which can be attached to the second arm 40. The first and second arms 38, 40 are slideable along the rod 36.

The elongated rod 36 has a plurality of spaced apart apertures 42 provided therein. In a preferred embodiment, the rod 36 has a square cross-section, and spaced apart apertures 42 along at least two of its sides.

The first arm 38 includes a mounting section 44 which attaches to the rod 36, an elongated extending section 46 which extends from the mounting section 44, and an engaging section 48 which extends from the extending section 46. The mounting section 44 preferably has a shape which mirrors the shape of the cross-section of the rod 36 and surrounds the rod 36. As shown, the mounting section 44 has a square cross-section having a central passageway through which the rod 36 extends. The mounting section 44 is slideable along the length of the rod 36. An aperture is provided through the mounting section 44 and is aligned with one of the plurality of apertures 42 when the mounting section 44 is positioned in a desired position. The extending section 46 has upper and lower ends, an inner surface which faces the second arm 40, and an opposite outer surface. The upper end of the extending section 46 is attached to the mounting section 44, and the extending section 46 extends downwardly therefrom. The engaging section 48 extends from the lower end of the extending section 46. The engaging section 48 is preferably L-shaped and has a horizontal leg 50 and a vertical leg 52.

A lock 54, for example a spring loaded pin, a rotatable pin or a cotter pin, is provided for locking the first arm 38 to the rod 36. The lock 54 extends through the aperture in the mounting section 44 and is capable of being engaged with one of the apertures 42 in the rod 36. The lock 54 is disengaged from the rod 36 in a released position to allow the first arm 38 to be slid along the rod 36 to a desired position, and the lock 54 is engaged into one of the apertures 42 in the rod 36 in an engaged position to prevent the movement of the first arm 38 relative to the rod 36. The lock 54 is preferably permanently attached to the mounting section 44.

The second arm 40 includes a mounting section 56 which attaches to the rod 36, an elongated extending section 58 which extends from the mounting section 56, and an engaging section 60 which extends from the extending section 58. The mounting section 56 preferably has a shape which mirrors the shape of the cross-section of the rod 36 and surrounds the rod 36. As shown, the mounting section 56 has a square cross-section having a central passageway through which the rod 36 extends. The mounting section 56 may be slideable along the length of the rod 36. An aperture is provided through the mounting section 56 and is aligned with one of the plurality of apertures 42 when the mounting section 56 is positioned in a desired position. The extending section 58 has upper and lower ends, an inner surface which faces the first arm 38, and an opposite outer surface. The upper end of the extending section 58 is attached to the mounting section 56, and the extending section 58 extends downwardly from the mounting section 56. A hook attachment member 62 extends from the outer surface of the extending section 58. The hook attachment member 62 may take a variety of forms, such as a U-shaped member as shown in the drawings, an L-shaped member having an opening at its upper end, etc. The engaging section 60 extends from the lower end of the extending section 58. The engaging section 60 is preferably L-shaped and has a horizontal leg 64 and a vertical leg 66.

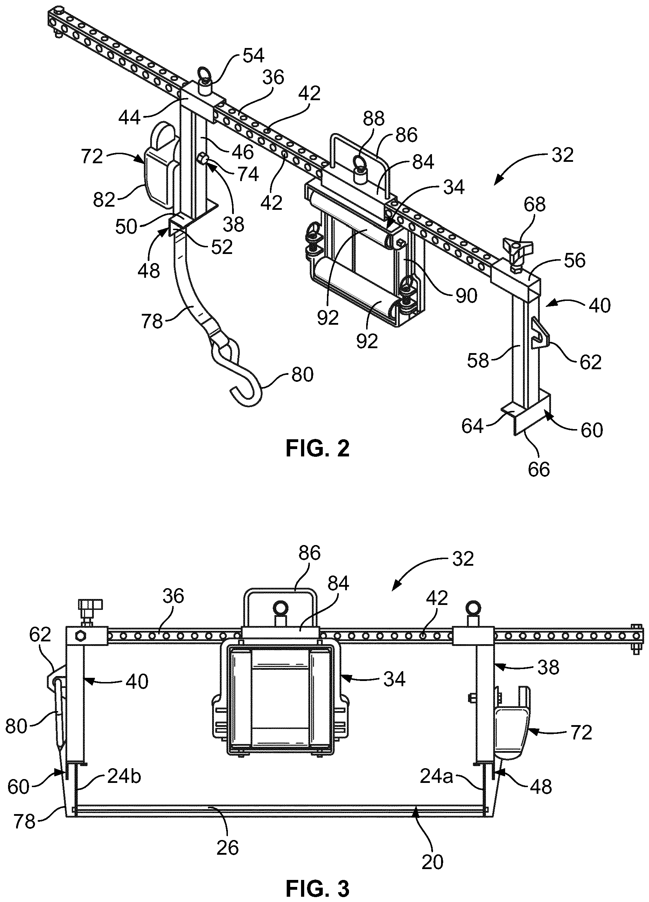

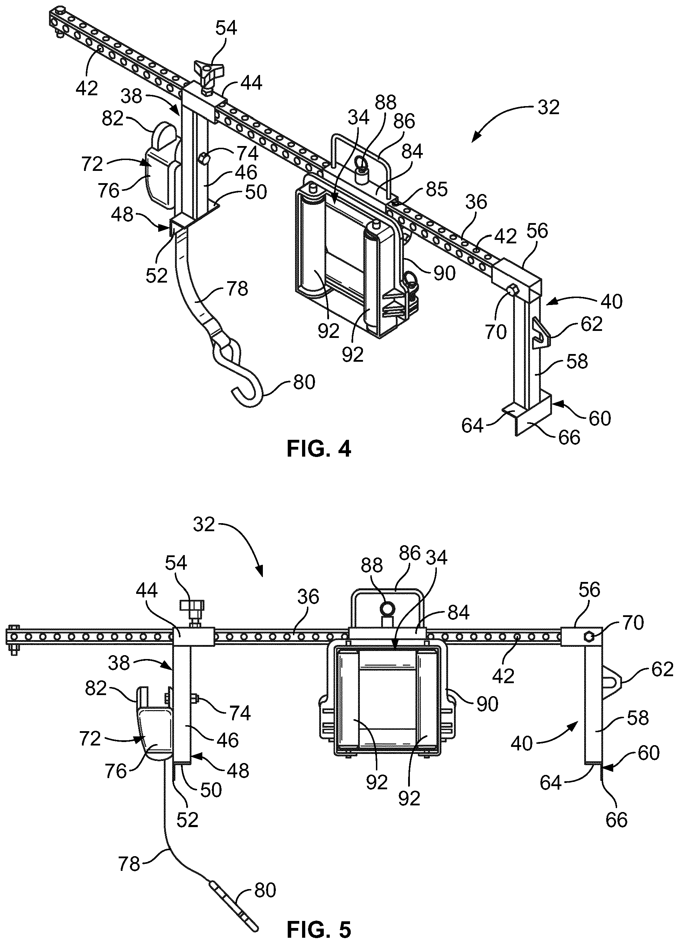

As shown in FIG. 2, the second arm 40 may have a lock 68 like that of the first arm 38 which extends through the aperture in the mounting section 56 and is capable of being engaged with one of the apertures 42 in the rod 36, or may have a permanent fastener 70, such as a screw, as shown in FIG. 4, which is inserted through the aperture in the mounting section 56 and into one of the apertures 42 in the rod 36. Preferably, if the second arm 40 is permanently fixed into position, the second arm 40 is mounted at an end of the rod 36 to allow for the maximum travel length along the rod 36 for the first arm 38.

A ratchet mechanism 72 is attached to the first arm 38, for example by a fastener 74 that extends through the extending section 46 and into the ratchet mechanism 72. The ratchet mechanism 72 includes a ratchet 76 having a single-sided auto-retracting strap 78 with S-hook 80 sewn onto the end. A rubber-coated handle 82 on the ratchet 76 allows users to ratchet tight the strap 78 when the hook 80 is latched onto the hook attachment member 62 on the second arm 40 as described herein. Such a suitable ratchet mechanism 72 is sold under the trade name CargoBuckle by Immi. The strap 78 can be extended from and retracted into the ratchet 76 as is known in the art.

The mounting assembly 32 further includes a product mounting channel 84 having a central passageway 85 through which the rod 36 extends, a handle 86 attached to the mounting channel 84 preferably along its top surface, and a lock 88 for locking the product mounting channel 84 into a desired position. The product mounting channel 84 is mounted between the arms 38, 40 and is slideable along the rod 36 between the arms 38, 40. The product mounting channel 84 preferably has a shape which mirrors the shape of the cross-section of the rod 36. The central passageway 85 may surround the rod 36 or may be U-shaped such that the product mounting channel 84 engages the sides and top of the rod 36. An aperture is provided through the product mounting channel 84 and is aligned with one of the plurality of apertures 42 when the product mounting channel 84 is positioned in a desired position. The lock 88, for example a spring loaded pin, a rotatable pin or a cotter pin, is provided for locking the product mounting channel 84 to the rod 36. The lock 88 extends through the aperture in the product mounting channel 84 and is capable of being engaged with one of the apertures 42 in the rod 36. The lock 88 is disengaged from the rod 36 in a released position to allow the product mounting channel 84 to be slid along the rod 36 to a desired position, and the lock 88 is engaged into one of the apertures 42 in the rod 36 in an engaged position to prevent the movement of the product mounting channel 84 relative to the rod 36. The lock 88 is preferably permanently attached to the product mounting channel 84. As described herein, a user can grasp the handle 86 to slide the product 34 along the length of the rod 36 to a desired position.

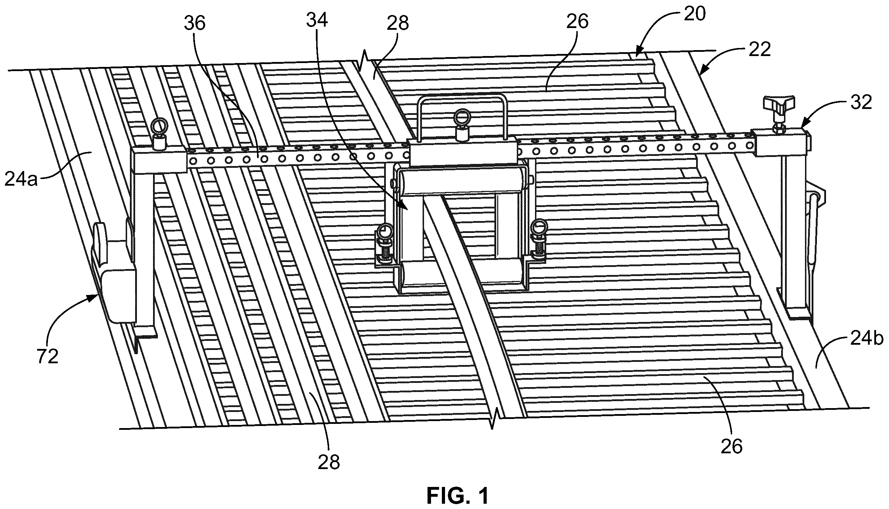

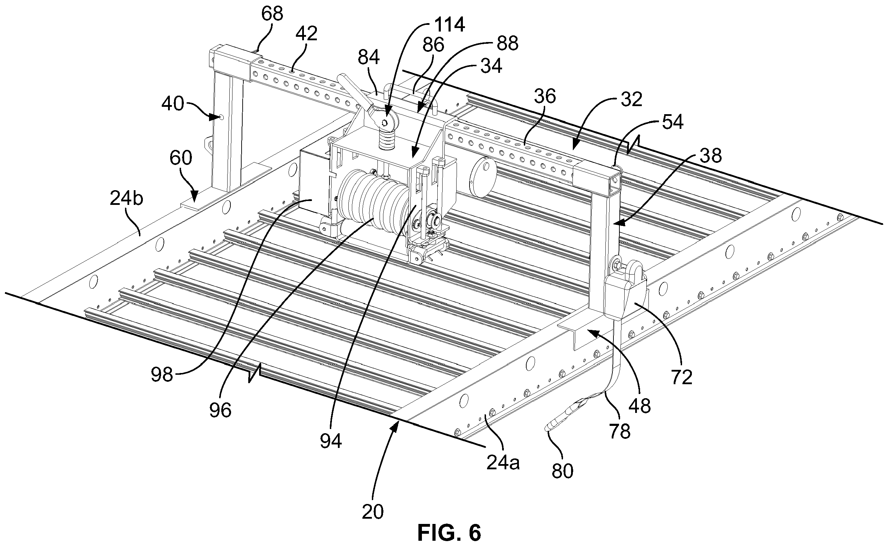

Examples of a product 34 that can be mounted over the cable tray 20 using the mounting assembly 32 is a cable roller as shown in FIGS. 1-5. Cable rollers are known in the art. The cable roller is attached to the product mounting channel 84, for example by welding or by a fastener, and as such, is in a suspended position above the base 22 of the cable tray 20. The cable roller can include a support assembly 90 and at least one roller 92 rotatably attached to the support assembly 90. Another example of a cable roller is shown in Applicant's co-pending application Serial No. 13/795,434, which disclosure is herein incorporated by reference. Another example of a product 34 that can be mounted over the cable tray 20 using the mounting assembly 32 is a cable feeder as shown in FIG. 6. Cable feeders are known in the art. The cable feeder is attached to the product mounting channel 84, for example by welding or by a fastener, and as such, is in a suspended position above the base 22 of the cable tray 20. As is known in the art, the cable feeder includes a support assembly 94, a drive roller 96 rotatably attached to the support assembly 94, and which is driven by a motor 98.

To use the mounting assembly 32, the user seats that second arm 40 on the rail 24b of the cable tray 20 by positioning the engaging section 60 on the rail 24b. If the engaging section 60 is L-shaped, the horizontal leg 64 seats on top of the upper surface of the rail 24b, and the vertical leg 66 abuts against the outer surface of the rail 24b. If not permanently attached to the rod 36, the user then then fixes the second arm 40 in position relative to the rod 36 using the lock 68. Thereafter, the first arm 38 is slid along the length of the rod 36 until the first arm 38 is positioned such that engaging section seats on the rail 24a. The first arm 38 can be moved to a variety of positions to accommodate a large number of widths of cable trays 20. If the engaging section 48 is L-shaped, the horizontal leg 50 seats on top of the upper surface of the rail 24a, and the vertical leg 52 abuts against the outer surface of the rail 24a. Thereafter, the lock 54 is engaged to fix the first arm 38 in position relative to the rod 36.

Thereafter, the strap 78 and hook 80 are extended from the ratchet 76, extended around the bottom of the cable tray 20 (the side opposite to where the cable 28 lays), and attached to the hook attachment member 62 on the second arm 40. The strap 78 auto-retracts into the ratchet 76 to eliminate any slack, and the handle 82 can be activated to further reduce any slack and secure the strap 78 to the cable tray 20. The ratchet mechanism 72 reduces time/manpower requirements currently associated with setting up and performing cable tray pulls, as well as providing an easily adjustable and secure method of clamping/connecting the product 34 to the cable tray 20. The ratchet mechanism 72 can be used to connect products 34 to all sizes and types of cable trays 20, and the ratchet mechanism 72 utilizes the compressive strength of the cable tray 20 to securely install the attached products 34. The ratchet mechanism 72 is adjustable and provides strength and security in fastening products to cable trays 20. The ratchet mechanism 72 does not require twisting or squeezing motions from the user to tighten a clamp, and the ratchet mechanism 72 does not require two separate clamps on each side of the cable tray 20 because the strap 78 extends underneath the cable tray 20 to both sides. As a result of the flexibility provided by the ratchet mechanism 72, the ratchet mechanism 72 is compatible with a variety of cable trays 20 as the ratchet mechanism 72 conforms to the shape of the cable tray 20 to which the ratchet mechanism 72 is connected.

The product 34 is positioned in the desired position relative to the cable tray 20 between the arms 38, 40 and secured to the rod 36 using the lock 88. The cable 28 can then be easily installed in the cable tray 20 using the product 34. Numerous mounting assemblies 32 can be provided along the length of the cable tray 20 so that a variety of products 34 can be used. Different products 34 can be mounted onto the same rod 36 during the assembly process of the mounting assembly 32.

The product 34 and its mounting assembly 32 can be easily disengaged from the cable tray 20. To do so, the tension on the strap 78 is released by the user activating the ratchet 76 and the hook 80 is released from the hook attachment member 62. The strap 78 and its hook 80 are retracted into the ratchet 76. The mounting assembly 32 is then lifted off of the cable tray 20.

While the ratchet mechanism 72 is shown and described as being on the first arm 38 and the hook engagement member 62 is shown and described as being on the second arm 40, it is to be understood that the ratchet mechanism 72 can be on the second arm 40 and the hook engagement member 62 can be on the first arm 38. With this alternative, the strap 78 is still extended and passed under the cable tray 20 to secure the mounting assembly 32 to the cable tray 20.

## Claims

1. A combination with a mounting assembly (32) for attaching a product (34) to a cable tray (20) comprising an elongated rod (36), a first arm (38) extending downwardly from said rod (36), a second arm (40) extending downwardly from said rod (36) and spaced from said first arm (38), and a product (34) configured to route cable relative to the cable tray (20), the product (34) being mounted on the rod (36) between the first and second arms (38, 40), the product (34) extending downwardly from the rod (36) and being moveable along the rod (36) between the first and second arms (38,40), **characterized in that** a ratchet (76) is provided, attached to one of said arms, that a single-sided auto-retracting strap (78) provided in said ratchet (76), said strap (78) being extendable from and retractable into said ratchet (76), that an attachment member (62) on the other of said arms for attaching the strap (78) thereto is provided; and that the product (34) is spaced form the strap (78).

2. The combination of claim 1, **characterized in that** said first arm (38) is moveable along said rod (36), and/or said first arm (38) includes a lock (54) for locking the position of the first arm (38) relative to the rod (36).

3. The combination of any of claims 1 or 2, **characterized in that** said second arm (40) is moveable along said rod (36).

4. The combination of any of claims 1 to 3, **characterized in that** said second arm (40) includes a lock (54) for locking the position of the second arm (40) relative to the rod (36).

5. The combination of claim 1, **characterized in that** said second arm (40) is permanently fixed attached to said rod (36).

6. The combination of any of claims 1 to 5, **characterized in that** each of the first and second arms (38, 40) have a leg (50, 52) extending outwardly therefrom which is spaced from said rod (36).

7. The combination of any of claims 1 to 6, **characterized in that** the strap (78) has a hook provided at an end thereof which attaches to the attachment member (62).

8. A combination of any of claims 1 to 7 and further in combination with a cable tray (20) comprising a base (22), said base (22) having an upper surface upon which cables can be laid for routing through a building and, wherein further the base (22) has an opposite lower surface; **characterized in that** said strap (78) can be extended around the bottom of said base (22) of the cable tray (20).

9. The combination of claim 8, **characterized in that** each said leg (50, 52) engages with said upper surface of said base (22) of said cable tray (20).

## Patentansprüche

1. Kombination einer Montageanordnung (32) zur Anbringung eines Gegenstandes (34) an einem Kabelträger (20), mit einer langgestreckten Stange (36), einem ersten Arm (38), der sich von der Stange (36) nach unten erstreckt, und einem zweiten Arm (40), der sich von der Stange (36) nach unten erstreckt und zu dem ersten Arm (38) beabstandet ist, und dem Gegenstand (34), der dazu ausgebildet ist, das Kabel relativ zu dem Kabelträger (20) zu trassieren, wobei der Gegenstand (34) an der Stange (36) zwischen dem ersten und dem zweiten Arm (38, 40) angebracht ist, sich von der Stange (36) nach unten erstreckt und entlang der Stange (36) zwischen ersten und zweiten Armen (38, 40) bewegbar ist, **dadurch gekennzeichnet, dass** eine Ratsche (76) vorgesehen ist, die an einem der Arme angebracht ist, dass in der Ratsche einseitig ein selbstrückziehbarer Gurt (78) vorgesehen ist, wobei der Gurt (78) aus der Ratsche (76) herausziehbar und in diese zurückziehbar ist, dass ein Anbringungsteil (62) an dem anderen Arm zur Anbringung des Streifens (78) daran vorgesehen ist, und dass der Gegenstand (34) von dem Streifen (78) beabstandet ist.

2. Kombination nach Anspruch 1, **dadurch gekennzeichnet, dass** der erste Arm (38) entlang der Stange (36) bewegbar ist und/oder dass der erste Arm (38) eine Verriegelung (54) aufweist, zur Verriegelung der Stellung des ersten Armes (38) relativ zu der Stange (36).

3. Kombination nach einem der Ansprüche 1 oder 2, **dadurch gekennzeichnet, dass** der zweite Arm (40) entlang der Stange (36) bewegbar ist.

4. Kombination nach einem der Ansprüche 1 bis 3, **dadurch gekennzeichnet, dass** der zweite Arm (40) eine Verriegelung (54) aufweist, zur Verriegelung der Stellung des zweiten Armes (40) relativ zu der Stange (36).

5. Kombination nach Anspruch 1, **dadurch gekennzeichnet, dass** der zweite Arm (40) ständig an der Stange (36) befestigt ist.

6. Kombination nach einem der Ansprüche 1 bis 5, **dadurch gekennzeichnet, dass** jeder der ersten und zweiten Arme (38, 40) einen Schenkel (50, 52) aufweist, der sich nach außen erstreckt und von der Stange (36) beabstandet ist.

7. Kombination nach einem der Ansprüche 1 bis 6, **dadurch gekennzeichnet, dass** der Gurt (78) einen Haken aufweist, der an einem seiner Enden angebracht ist und die Anbringung zu dem Anbringungsteil (62) erbringt.

8. Kombination nach einem der Ansprüche 1 bis 7 und weiter in Kombination mit einer ein Basisteil (22) aufweisenden Kabelaufnahme (20), wobei das Basisteil (22) eine obere Fläche, auf welcher die Kabel abgelegt sein können um sie durch ein Gebäude zu führen, aufweist und wobei weiter das Basisteil (22) eine entgegengesetzte untere Fläche aufweist, **dadurch gekennzeichnet, dass** der Gurt (78) um den Boden des Basisteils (22) des Kabelträgers (20) geführt werden kann.

9. Kombination nach Anspruch 8, **dadurch gekennzeichnet, dass** jeder Schenkel (50, 52) mit der oberen Fläche des Basisteils (22) des Kabelträgers (20) in Zusammenwirkung ist.

## Revendications

1. Une combinaison comprenant un ensemble de montage (32) pour fixer un produit (34) à un chemin de câbles (20) comprenant une tige allongée (36), un premier bras (38) s'étendant vers le bas à partir de ladite tige (36), un deuxième bras (40) s'étendant vers le bas à partir de ladite tige (36) et espacé dudit premier bras (38), et un produit (34) configuré pour guider un câble relativement au chemin de câbles (20), le produit (34) étant monté sur la tige (36) entre les premier et deuxième bras (38, 40), le produit (34) s'étendant vers le bas à partir de la tige (36) et étant mobile le long de la tige (36) entre les premier et deuxième bras (38, 40), **caractérisée en ce qu'**est prévu un dispositif à cliquet (76) fixé à l'un desdits bras, **en ce qu'**une sangle auto-rétractable unilatérale est prévue dans ledit dispositif à cliquet (76), ladite sangle (78) pouvant être étendue à partir dudit dispositif à cliquet (76) et pouvant être rétractée dans ledit dispositif à cliquet (76), **en ce qu'**est prévu un élément d'attache (62) sur l'autre desdits bras pour attacher la sangle à celui-ci, et **en ce que** le produit (34) est espacé de la sangle (78).

2. La combinaison de la revendication 1, **caractérisée en ce que** ledit premier bras (38) est mobile le long de ladite tige (36), et/ou ledit premier bras (38) comprend un verrou (54) pour bloquer la position du premier bras (38) par rapport à la tige (36).

3. La combinaison de l'une quelconque des revendications 1 ou 2, **caractérisée en ce que** ledit deuxième bras (40) est mobile le long de ladite tige (36).

4. La combinaison de l'une quelconque des revendications 1 à 3, **caractérisée en ce que** ledit deuxième bras (40) comprend un verrou (54) pour bloquer la position du deuxième bras (40) par rapport à la tige (36).

5. La combinaison de la revendication 1, **caractérisée en ce que** ledit deuxième bras (40) est fixé à demeure à ladite tige (36).

6. La combinaison de l'une quelconque des revendications 1 à 5, **caractérisée en ce que** chacun des premier et deuxième bras (38, 40) a une patte (50, 52) s'étendant vers l'extérieur de celui-ci et qui est espacée de ladite tige (36).

7. La combinaison de l'une quelconque des revendications 1 à 6, **caractérisée en ce que** la sangle (78) comporte un crochet prévu à une extrémité de celle-ci qui s'attache à l'élément d'attache (62).

8. Une combinaison selon l'une quelconque des revendications 1 à 7 et en outre en combinaison avec un chemin de câbles (20) comprenant une base (22), ladite base (22) ayant une surface supérieure sur laquelle des câbles peuvent être posés pour cheminement à travers un bâtiment et dans laquelle en outre la base (22) a une surface inférieure opposée ; **caractérisée en ce que** ladite sangle (78) peut être étendue autour du bas de ladite base (22) du chemin de câble (20).

9. La combinaison de la revendication 8, **caractérisée en ce que** chacune desdites pattes (50, 52) vient en engagement avec ladite surface supérieure de ladite base (22) dudit chemin de câble (20).
